# EUROPÄISCHE PATENTSCHRIFT

(11) **EP 3 147 239 B1**
(45) Veröffentlichungstag und Bekanntmachung des Hinweises auf die Patenterteilung: **17.01.2018**
(21) Anmeldenummer: 15186508.6
(22) Anmeldetag: 23.09.2015
(51) Int. Cl.: B65G 15/42, B65G 17/24, F16G 1/28

(54) **ZAHNRIEMEN MIT INTEGRIERTEN STÜTZROLLEN**
TOOTH BELT WITH INTEGRATED SUPPORTING ROLLING MEANS
COURROIE DENTÉE AVEC ROULEAUX INTÉGRÉS POUR LE SUPPORT

(43) Veröffentlichungstag der Anmeldung: 29.03.2017
(73) Patentinhaber: BRECO Antriebstechnik Breher GmbH & Co. KG, 32457 Porta Westfalica (DE)
(72) Erfinder: STEINERT, Thomas, 32545 Bad Oeynhausen (DE)
(74) Vertreter: Zenz Patentanwälte Partnerschaft mbB

(56) Entgegenhaltungen:
- WO-A1-03/101865
- DE-B- 1 149 665
- US-A- 5 911 307

## Beschreibung

Die Erfindung betrifft einen Zahnriemen zum Transportieren von Objekten, aufweisend einen bandförmigen Riemenkörper, der auf seiner einen Seite angeformte Zahnprofile trägt, die in Längsrichtung des Zahnriemens gleichmäßig verteilt angeordnet sind.

Ein Zahnriemen der Eingangs bezeichneten Art ist aus dem Stand der Technik bekannt und wird in der DE 20 2012 100 232 U1 beschrieben. Solche Zahnriemen werden in vielen Fällen heute nicht mehr nur als reines Zugmittelgetriebe, sondern auch als hochpräzises Fördermittel für Bauteile in einer automatisierten Produktion genutzt. Dabei werden sie quasi wie ein genau steuerbares, schmales Förderband verwendet. Derartige Transporteinrichtungen sind dann in der Regel recht lang, so dass Riemenlängen von mehr als fünfzig Metern keine Seltenheit sind. Die Zahnriemen werden im Obertrum in Führungsschienen geführt, damit bei Belastung durch die zu transportierenden Produkte kein Durchhang entsteht und im Start-Stopp-Betrieb keine Schwingungen des Zahnriemens auftreten. Durch die Gewichtsbelastung der Bauteile des Riementriebs, aber auch durch das Riemen-Eigengewicht entsteht auf diesen Führungsschienen eine Normalbelastung, die in Kombination mit dem vorherrschenden Reibbeiwert bei Bewegung zu einer Verlustleistung führt. Diese Verlustleistung vergrößert zum einen die erforderliche Antriebsleistung und den Energieverbrauch der Anlage. Zum anderen erwärmt sie den Zahnriemen in Abhängigkeit der Riemenlänge, der Bauteilgewichte und Geschwindigkeiten so sehr, dass die Standzeit der Zahnriemen deutlich sinkt, was unter anderem dadurch begründet ist, dass die Zugfestigkeit von thermoplastischem Polyurethan als Werkstoff der Zahnriemen mit steigender Temperatur überproportional stark abnimmt.

Die aus dem Stand der Technik bekannten Lösungsansätze zielen darauf ab, den Reibbeiwert zwischen Zahnriemen und Führungsschiene zu reduzieren. Schienenseitig werden heute polierte Edelstahlbleche und spezielle Kunststoffe mit günstigen Reibeigenschaften im Kontakt mit Polyurethan eingesetzt. Riemenseitig werden auf der Zahnprofilseite Gewebebeschichtungen eingesetzt, die den Reibbeiwert im Neuzustand zwar deutlich senken, aufgrund von Verschleiß aber nur eine zeitlich begrenzte Wirksamkeit haben. In der Summe sind diese möglichen Maßnahmen nicht zufriedenstellend, denn bei höheren Geschwindigkeiten, Lasten und Betriebstemperaturen versagt das System. Nachteilig kommt hinzu, dass im Lebensmittelbereich der Verschleiß von Gewebe und Führungsschiene stört, weil eine Kontamination der Lebensmittel mit Abrieb nicht ausgeschlossen werden kann.

Um diese bekannten Nachteile zu vermeiden, ist es aus dem Stand der Technik bekannt, von Gleit- zu Rollreibung überzugehen, sofern man die im Hertz'schen Rollkontakt entstehenden Flächenpressungen beherrscht.

Aus anderen Transportbereichen sind dementsprechend Einrichtungen bekannt, bei denen das Rollelement in das stehende Teil integriert ist (zum Beispiel Kugellager oder Rolle in Führungsschiene). Beispielsweise beschreibt die DE 20 2007 014 761 U1 ein System, bei dem ein Riemen mit Hilfe von Gleitschienen und Stützrollen gestützt und geführt ist.

Jedoch stellt bei Zahnriemen die Verzahnung ein Problem dar, so dass die aus dem Stand der Technik bekannten Maßnahmen nicht übertragbar sind. Denn um Zahneingriffsstößen zu entgehen, müssten entweder sehr viele schmale Stützrollen über der Breite versetzt in den Führungsschienen angeordnet werden, so dass jedes Zahnprofil immer irgendwo auf der Riemenbreite und Riemenlänge Unterstützung durch eine Stützrolle erfährt. Oder es müssten glatte, zahnfreie Längsspuren auf dem Zahnriemen vorgesehen sein, in denen über der Breite mehrere (mindestens zwei) kugellagerähnliche schmale Stützrollen laufen und für die Abstützung sorgen. Beide Möglichkeiten sind aber aufwändig und mit technischen Kompromissen behaftet.

Ausgehend von dem bekannten Stand der Technik liegt der Erfindung die Aufgabe zugrunde eine Lösung zu schaffen, die auf konstruktiv einfache Weise einen verbesserten Zahnriemen zum Transportieren von Objekten bereitstellt, welcher die aus dem Stand der Technik bekannten Probleme vermeidet und eine Möglichkeit einer wirkungsvollen Abstützung der Zahnprofilseite eines Zahnriemens bietet.

Bei einem Zahnriemen der Eingangs bezeichneten Art wird die Aufgabe erfindungsgemäß dadurch gelöst, dass wenigstens ein Zahnprofil zumindest eine Aussparung aufweist, in der eine Stützrolle angeordnet ist, deren Lauffläche zur Abstützung des Zahnriemens über die Kopffläche des zugehörigen Zahnprofiles hinausragt.

Vorteilhafte und zweckmäßige Ausgestaltungen und Weiterbildungen der Erfindung ergeben sich aus den Unteransprüchen.

Durch die Erfindung wird ein Zahnriemen zur Verfügung gestellt, welcher sich durch eine funktionsgerechte Konstruktion auszeichnet. Im Unterschied zum bekannten Stand der Technik ist erfindungsgemäß das rollende Element in Form der Stützrolle in das bewegliche Teil, den Zahnriemen, integriert. Die in den Zahnprofilen integrierten Stützrollen stützen den Zahnriemen auf Führungsschienen eines Transportsystems ab und vermeiden Schwingungen beim Anfahren und Abstoppen des Zahnriemens. Darüber hinaus reduziert die durch die Stützrollen gegebene Abstützung die Reibungsverluste, so dass der erfindungsgemäße Zahnriemen eine geringere Antriebsenergie benötigt als die aus dem Stand der Technik bekannten Systeme, bei denen der Riemen reibungsbehaftet in einer Schiene gestützt und geführt ist. Der erfindungsgemäße Ansatz, Stützrollen in den Zahnriemen zu integrieren, über die der Zahnriemen abgestützt ist und rollend bewegt wird, erhöht darüber hinaus die Standzeit des Zahnriemens, da sich dieser aufgrund der Rollreibung nicht mehr derart erwärmt, wie es bei den Riemen der Fall ist, die über die Gleitreibung in Führungsschienen geführt werden. Insbesondere entfällt mit der erfindungsgemäßen Ausbildung des Zahnriemens eine aufwendige Abstützung der Zahnprofilseite mittels mehrerer, ortsfest an der Führungsschiene befestigter Rollen. Da die jeweiligen Aussparungen das Zahnprofil und damit den Zahnriemen schwächen, sind die Aussparungen mit den darin angeordneten Stützrollen zumindest in einigen der Zahnprofile ausgebildet, wobei es auch denkbar ist, jedes Zahnprofil mit einer Aussparung und einer der Abstützung dienenden Stützrolle auszubilden. Natürlich umfasst die Erfindung auch Ausgestaltungen, bei denen entweder jedes Zahnprofil oder jedes n-te (ganzzahlige Vielfache, wie zum Beispiel jedes zweite, dritte, vierte usw.) Zahnprofil mehr als eine Aussparung aufweisen kann. Die Anzahl der Aussparungen und damit der Stützrollen je Zahnprofil kann in Abhängigkeit der Riemenbreite gewählt werden, so dass es durchaus sinnvoll ist, bei breiten Zahnriemen mehrere Stützrollen je Zahnprofil vorzusehen.

Eine konstruktiv günstige Möglichkeit, eine jeweilige Stützrolle in einem Zahnprofil zu integrieren, besteht in Ausgestaltung der Erfindung darin, dass die zumindest eine Aussparung in Bezug auf die Breitenrichtung des Zahnriemens das zugehörige Zahnprofil in Zahnprofilabschnitte teilt, wobei die der Aussparung zugehörige Stützrolle in den angrenzenden Zahnprofilabschnitten des zugehörigen Zahnprofiles drehbar gehalten ist.

Aus Stabilitätsgründen der Zahnprofile ist es in Ausgestaltung der Erfindung von Vorteil, dass eine jeweilige Stützrolle mit höchstens einem Drittel ihres Radius über die Kopffläche des zugehörigen Zahnprofiles hinausragt. Insbesondere ragt eine jeweilige Stützrolle ausschließlich über die Kopffläche und nicht über die Flankenseiten des zugehörigen Zahnprofiles hinaus, so dass die Stützrolle die Schwächung des Zahnprofiles infolge der Aussparung zumindest materialmäßig ausgleicht. Darüber hinaus fällt durch den geringen Überstand einer jeweiligen Stützrolle über die zugehörige Kopffläche der Aufwand zur Anpassung der Zahnscheibe gering aus. Denn ein Zahnriemen mit T-Profil trägt auf der Zahnscheibe über die Riemen-Zahnlücke, denn der Riemen-Zahnkopf liegt in der Scheibe nicht auf. Die vorhandene Luft ist größer als der Überstand der unten aus den Zahnprofilen herausschauenden Stützrollen, so dass eine ganz normale Standard-Zahnscheibe zum Einsatz kommen kann. Hingegen trägt ein Zahnriemen mit AT-Profil über die Zahnköpfe. Wenn jedes zweite Zahnprofil mit einer Stützrolle ausgestattet ist, dann muss hier der Lückengrund der Zahnscheiben so angepasst werden, dass in jeder zweiten Zahnlücke ein Zylinderabschnitt freigemacht wird, in den die Stützrolle eintaucht.

Um die eine Schwächung des Zahnprofils darstellende Aussparung so gering und klein wie möglich zu halten, sieht die Erfindung in Ausgestaltung vor, dass eine jeweilige Aussparung in einem zugehörigen Zahnprofil eine schalenförmige und abschnittsweise der Kontur der in Breitenrichtung des Zahnriemens angrenzenden Zahnprofilabschnitte entsprechende Querschnittsform aufweist und sich bis in den Riemenkörper hinein erstreckt. Dabei ist die schalenförmige Kontur insbesondere der Lauffläche einer entsprechenden Stützrolle angepasst.

Gemäß einer Ausführungsform der Erfindung besteht eine Möglichkeit der drehbaren Halterung einer Stützrolle darin, dass eine jeweilige Stützrolle über eine in dem zugehörigen Zahnprofil fixierte Achse drehbar gelagert ist. Hier dreht sich folglich die Stützrolle um die im Zahnprofil fixierte Achse.

Bei einer solchen Ausführungsform ist es dann von Vorteil, wenn ein erstes Längsende der Achse über eine Gewindeverbindung in einem Zahnprofilabschnitt eines zugehörigen Zahnprofils fixiert ist und ein zweites Längsende der Achse in einer Presspassverbindung in dem anderen Zahnprofilabschnitt des zugehörigen Zahnprofils befestigt ist. Die Achse kann hierbei einseitig als Schraube ausgeführt und dementsprechend in einen Zahnprofilabschnitt eingeschraubt sein, um ein axiales Herausrutschen der Achse zu verhindern.

Gemäß einer anderen Ausführungsform der Erfindung besteht eine Möglichkeit der drehbaren Halterung einer Stützrolle darin, dass endseitig an einer jeweiligen Stützrolle jeweils ein zur drehbaren Lagerung dienender Wellenstummel angeformt ist, wobei die Zahnprofilabschnitte jeweils eine Schnappverbindung zur Aufnahme und drehbaren Lagerung eines zugehörigen Wellenstummels aufweisen. Bei dieser Ausführungsform entfallen die Achse und damit ein Bauteil, da eine jeweilige Stützrolle mit zwei Wellenstummeln ausgeführt ist, welche die Lagerfunktion übernehmen. Da die Kräfte stets in Druckrichtung wirken, kann die Lagerung im Zahnriemen zahnseitig als offene Schnappverbindung gestaltet werden, so dass die Wellenstummel der Stützrollen bei Montage einfach nur eingeclipst werden müssen.

Um die Schwächung der jeweiligen Zahnprofile mit der Aussparung so gering wie möglich zu halten, ist in Ausgestaltung der Erfindung ferner vorgesehen, dass das Verhältnis von axialer Länge einer jeweiligen Stützrolle zur Riemenbreite wenigstens 0,1 und höchstens 0,65 beträgt. Bei einer Lagerung der Stützrollen mittels einer jeweiligen Achse hat es sich als besonders günstig erwiesen, wenn das Verhältnis von axialer Länge einer jeweiligen Stützrolle zur Riemenbreite 0,2 beträgt, wohingegen sich bei der Lagerung mittels der Wellenstummel ein Verhältnis von axialer Länge einer jeweiligen Stützrolle zur Riemenbreite von 0,6 als vorteilhaft erwiesen hat.

Um den erfindungsgemäßen Zahnriemen als Endlosriemen einsetzen zu können, sieht die Erfindung in weiterer Ausgestaltung vor, dass die Längsenden des Zahnriemens kammartig und komplementär zueinander ausgebildete Stanzfinger aufweisen, die ein vorbestimmtes Stanzbild definieren und die zur Bildung eines Endlosriemens ineinandergreifend angeordnet und miteinander verschweißt sind, wobei sich das Stanzbild in Längsrichtung des Zahnriemens über wenigstens zwei Zahnprofile mit Stützrollen erstreckt.

Im Übrigen besteht der Zahnriemen vorzugsweise aus Polyurethan, wobei der Riemenkörper längsverlaufende Verstärkungslitzen aufweist, die aus Draht bestehen können, die aber in jedem Fall unterhalb einer jeweiligen Stützrolle verlaufen. Alternativ ist es auch denkbar, dass die Verstärkungslitzen ausschließlich seitlich neben einer jeweiligen Stützrolle verlaufen, wodurch es möglich ist, die Aussparung sehr tief in den Riemenkörper hineinreichend auszuformen.

Insbesondere bei schmalen Zahnriemen hat es sich als günstig erwiesen, dass die in den Aussparungen angeordneten Stützrollen in Längsrichtung des Zahnriemens fluchtend hintereinanderliegend angeordnet sind, was einen ruhigen Betrieb des Zahnriemens ermöglicht.

Zur Vermeidung von Schwingungen im Start-Stopp-Betrieb des Zahnriemens hat es sich als vorteilhaft erwiesen, wenn in jedem zweiten Zahnprofil des Zahnriemens zumindest eine eine Stützrolle aufnehmende Aussparung ausgebildet ist. Dadurch ist eine Abstützung des Zahnriemens ohne Durchhang gewährleistet.

Alternativ zu einer fluchtenden Anordnung der Aussparungen mit den darin angeordneten Stützrollen sieht die Erfindung vor, dass die in den Aussparungen benachbarter Zahnprofile angeordneten Stützrollen in Längsrichtung des Zahnriemens in Breitenrichtung versetzt zueinander angeordnet sind. Dabei ist es unerheblich, ob in jedem Zahnprofil oder jedem zweiten oder dritten Zahnprofil eine oder mehrere Aussparungen angeordnet sind. Es kommt nur darauf an, das Stützrollen in benachbarten Zahnprofilen versetzt zueinander angeordnet sind.

Um einen Durchhang des Zahnriemens in jedem Fall auszuschließen, sieht die Erfindung in vorteilhafterweise vor, dass in jedem Zahnprofil des Zahnriemens zumindest eine eine Stützrolle aufnehmende Aussparung ausgebildet ist.

Schließlich sieht die Erfindung in weiterer Ausgestaltung vor, dass wenigstens eine Stützrolle in einem Axialschnitt betrachtet ballig ausgebildet ist. Die Stützrollen können also eine leichte Tonnenform aufweisen, wenn sie im Axialschnitt ballig ausgebildet sind. Die ballige Form hat den Vorteil, dass sie im Vergleich zu einer rein zylindrischen Querschnittsform der Stützrolle reibungsärmer und weniger empfindlich gegen Kantentragen ist. Selbstverständlich kommen auch Stützrollen in Frage, die im Axialschnitt betrachtet trapezförmig ausgebildet sind. Auch ist es vorstellbar, dass bei einem Zahnriemen eine Mischung aus rein zylindrischen und ballig ausgebildeten Stützrollen zum Einsatz kommt.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhafte bevorzugte Ausführungsbeispiele der Erfindung dargestellt sind. In der Zeichnung zeigt:
Figur 1 eine Seitenansicht auf einen Abschnitt eines erfindungsgemäßen Zahnriemens,
Figur 2 eine Perspektivansicht auf einen Abschnitt des erfindungsgemäßen Zahnriemens,
Figur 3 eine Draufsicht auf einen Abschnitt des erfindungsgemäßen Zahnriemen,
Figur 4 eine Schnittansicht des Zahnriemens entlang der Linie A-A in Figur 3,
Figur 5 eine Schnittansicht des Zahnriemens entlang der Linie B-B in Figur 3,
Figur 6 eine Perspektivansicht auf einen Abschnitt des Zahnriemens mit der in einem Zahnprofil gelagerten Stützrolle,
Figur 7 der in Figur 6 gezeigte Abschnitt des Zahnriemens in einer perspektivischen Einzelteildarstellung,
Figur 8 eine Schnittansicht des Zahnriemens entlang der Linie C-C in Figur 3 für eine Lagerungsmöglichkeit einer im Zahnprofil aufgenommenen Stützrolle,
Figur 9 eine Schnittansicht des Zahnriemens entlang der Linie D-D in Figur 3 unter Auslassung der Stützrolle,
Figur 10 in perspektivischer Ansicht kammartige Längsenden des erfindungsgemäßen Zahnriemens entsprechend einem aus Figur 3 ersichtlichen Stanzbild,
Figur 11 eine Perspektivansicht auf einen Abschnitt eines erfindungsgemäßen Zahnriemens mit alternativer Möglichkeit der Lagerung der Stützrollen,
Figur 12 eine Draufsicht auf einen Abschnitt des Zahnriemens mit alternativer Möglichkeit der Lagerung der Stützrollen,
Figur 13 eine Schnittansicht des Zahnriemens entlang der Linie E-E in Figur 12,
Figur 14 eine Schnittansicht des Zahnriemens entlang der Linie F-F in Figur 12,
Figur 15 eine Schnittansicht des Zahnriemens entlang der Linie G-G in Figur 12,
Figur 16 eine Schnittansicht des Zahnriemens entlang der Linie H-H in Figur 12 unter Auslassung einer Stützrolle,
Figur 17 eine Perspektivansicht auf einen Abschnitt des Zahnriemens mit alternativer Möglichkeit der Lagerung der Stützrollen,
Figur 18 der in Figur 17 gezeigte Abschnitt des Zahnriemens in einer perspektivischen Einzelteildarstellung,
Figur 19 eine Perspektivansicht auf eine Ausführungsform des erfindungsgemäßen Zahnriemens mit zwei Stützrollen in einem Zahnprofil,
Figur 20 eine Perspektivansicht auf eine Ausführungsform des erfindungsgemäßen Zahnriemens mit in Breitenrichtung versetzt zueinander angeordneten Stützrollen und
Figur 21 eine Schnittansicht auf eine im Axialschnitt betrachtet ballig ausgebildete Stützrolle.

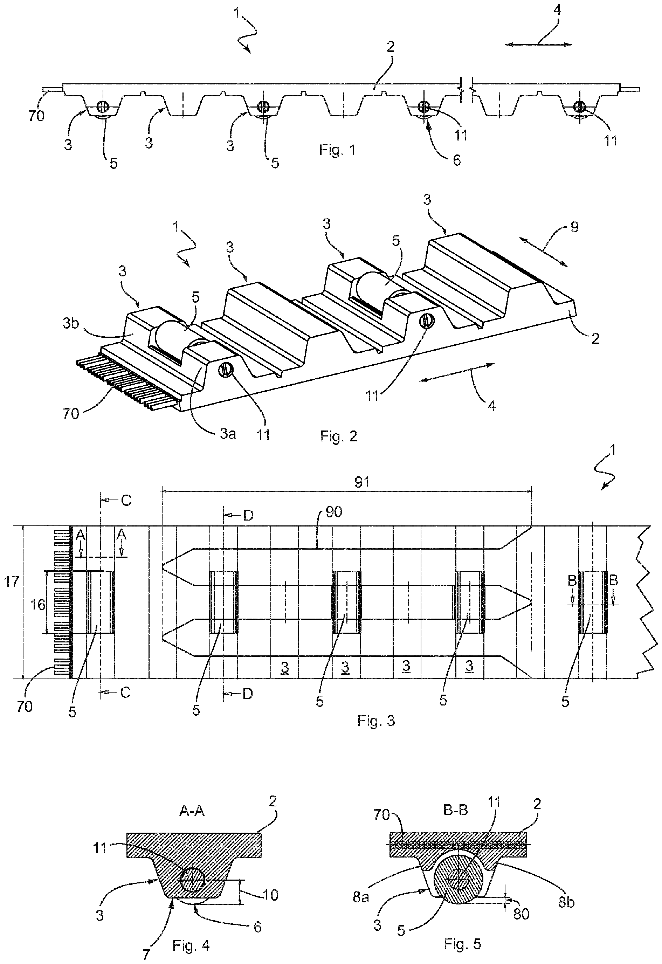

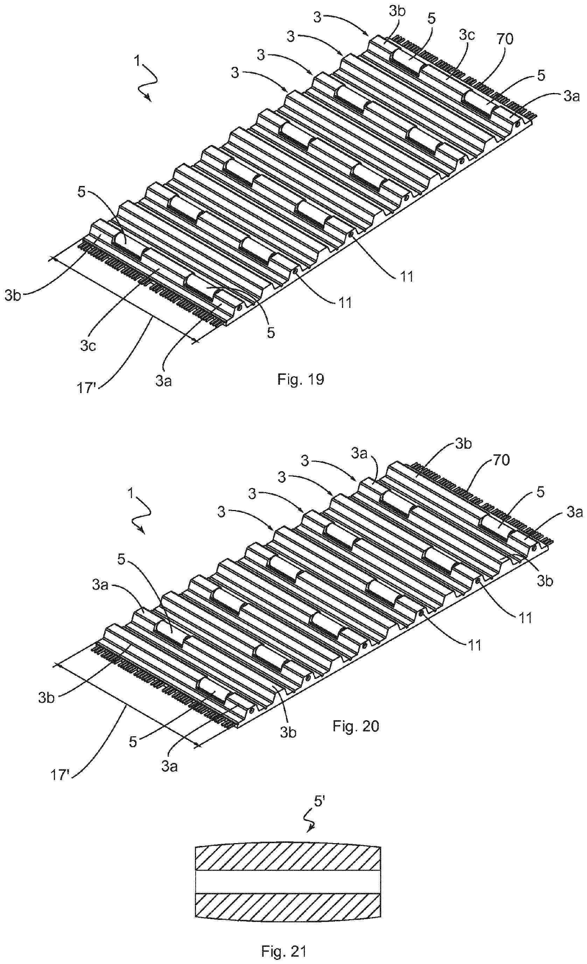

Die Figuren 1 bis 21 zeigen in schematischer Weise einen erfindungsgemäßen Zahnriemen 1 bzw. Ausschnitte und verschiedene Ansichten eines solchen Zahnriemens 1. Der erfindungsgemäße Zahnriemen 1 weist einen bandförmigen Riemenkörper 2 auf, der auf seiner einen Seite angeformte Zahnprofile 3 trägt, die in Längsrichtung 4 des Zahnriemens 1 gleichmäßig verteilt angeordnet sind. Der Zahnriemen 1 gemäß der in den Figuren gezeigten Ausführungsform ist dadurch charakterisiert, dass in einer Vielzahl von Zahnprofilen 3 oder sogar in jedem der Zahnprofile 3 mindestens eine Stützrolle 5 integriert ist, deren Lauffläche 6 über die Kopffläche 7 des zugehörigen Zahnprofiles 3 hinausragt (siehe zum Beispiel Figur 4), damit sich der Zahnriemen 1 über die Stützrollen 5 auf einer in den Figuren nicht dargestellten Führungsschiene abstützen kann. Wie beispielsweise aus den Figuren 2, 11 und 19 erkennbar ist, ist in jedem zweiten Zahnprofil 3 des Zahnriemens 1 eine Stützrolle 5 integriert, wobei bei der Ausführung gemäß der Figur 19 sogar zwei Stützrollen 5 in einem Zahnprofil 3 untergebracht sind. Selbstverständlich kann auch in jedem der Zahnprofile 3 eine Stützrolle 5 integriert sein, wie es beispielsweise in Figur 20 gezeigt ist. Denkbar sind aber auch Ausführungen, bei denen nur in jedem dritten oder vierten oder in jedem n-ten, d.h. ganzzahlig Vielfachen, Zahnprofil 3 eine Stützrolle 5 zur Abstützung des Zahnriemens 1 integriert ist. Es hat sich jedoch als günstig herausgestellt, wenigstens in jedem zweiten Zahnprofil 3 eine Stützrolle 5 zu integrieren.

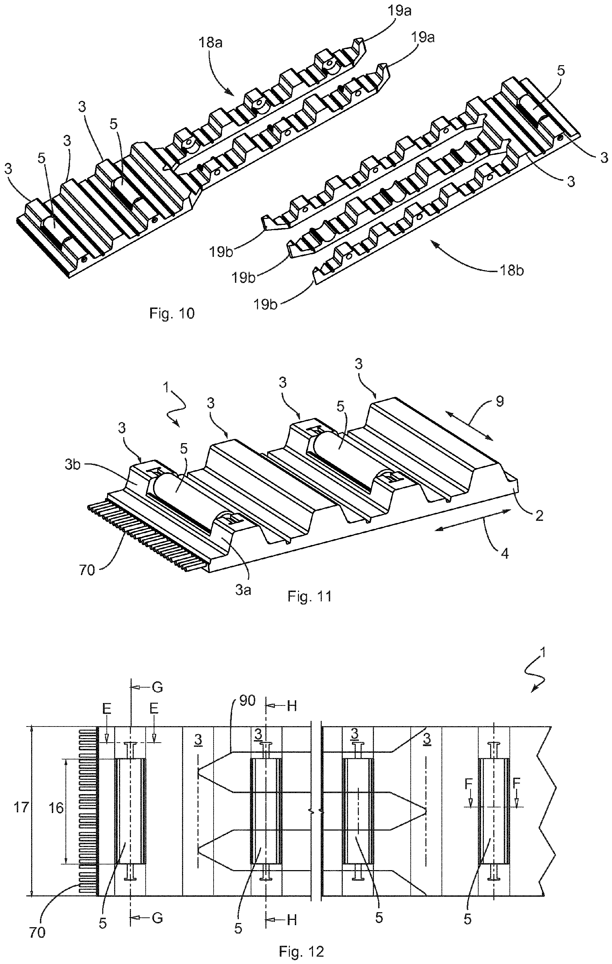

Die Figuren 1 bis 10 zeigen in schematischer Weise einen Zahnriemen 1, bei dem ein erstes Prinzip einer möglichen Lagerung der Stützrollen 5 zum Einsatz kommt, wohingegen die Figuren 11 bis 18 einen Zahnriemen 1 zeigen, der ein anderes Prinzip einer möglichen Lagerung der Stützrollen 5 aufweist. Genauer gesagt erfolgt die Lagerung der Stützrollen 5 bei der in den Figuren 1 bis 10 gezeigten Ausführungsform nach dem Prinzip einer Achse, wohingegen bei der in den Figuren 11 bis 18 gezeigten Ausführungsform die Lagerung nach dem Prinzip einer Welle ausgeführt ist.

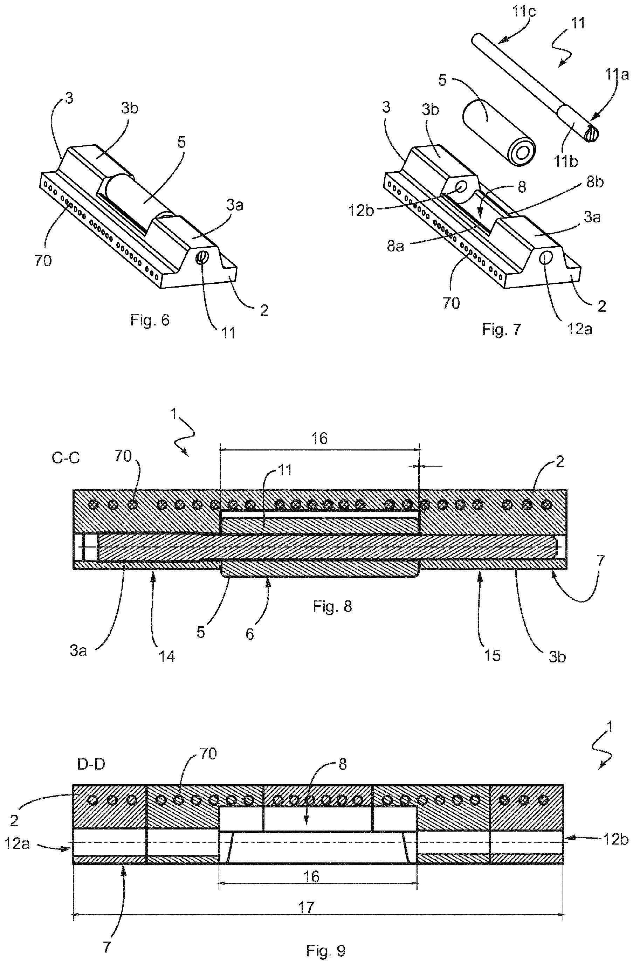

Mit Bezug auf die Figuren 1 bis 10 weist jedes zweite Zahnprofil 3 eine jeweilige Aussparung 8 auf (siehe zum Beispiel Figur 7 oder 9), die in Bezug auf die Breitenrichtung 9 des Zahnriemens 1 mittig eines zugehörigen Zahnprofiles 3 ausgebildet ist und in welcher eine entsprechende Stützrolle 5 angeordnet ist. Eine jeweilige Aussparung 8 teilt folglich das zugehörige Zahnprofil 3 in Zahnprofilabschnitte 3a und 3b, in denen die zugehörige Stützrolle 5 drehbar gehalten ist. Dabei weist eine jeweilige Aussparung 8 eine schalenförmige Kontur auf, wobei in Breitenrichtung 9 verlaufende Abschnitte 8a, 8b abschnittsweise der Querschnittsform der Zahnprofilabschnitte 3a, 3b folgen bzw. Abschnitten des ursprünglichen Zahnprofils 3 entsprechen, wie beispielsweise aus Figur 5 ersichtlich ist, die einen Schnitt entlang der Linie B-B in Figur 3 zeigt. Wie ebenfalls der Figur 3 zu entnehmen ist, erstreckt sich die Aussparung 8 in dem dargestellten Ausführungsbeispiel bis in den Riemenkörper 2 hinein und endet knapp oberhalb von längsverlaufenden Verstärkungslitzen 70, so dass diese auch im Bereich der Stützrollen 5 verlaufen. Natürlich sind auch Abwandlungen dieser Ausführungsform möglich, bei denen keine Verstärkungslitzen 70 im Bereich unterhalb der Stützrolle 5 angeordnet sind, so dass sich die Aussparung 8 noch tiefer in den Riemenkörper 2 hinein erstrecken kann.

Eine jeweilige Stützrolle 5 ragt mit maximal einem Drittel (siehe hierzu die Figuren 4 und 5) ihres Radius 10 über die Kopffläche 7 des zugehörigen Zahnprofils 3 hinaus, wie beispielsweise aus Figur 4 ersichtlich ist, die einen Schnitt entlang der Linie A-A aus Figur 3 zeigt, die wiederum eine Draufsicht auf einen Abschnitt des erfindungsgemäßen Zahnriemens 1 ist. Bis auf diesen hervorstehenden Abschnitt der Lauffläche 6, der in Figur 5 mit dem Bezugszeichen 80 kenntlich gemacht ist, sind die Stützrollen 5 vollständig innerhalb der Querschnittsform der jeweiligen Zahnprofile 3 bzw. der Querschnittsform der zugehörigen Zahnprofilabschnitte 3a, 3b aufgenommen, so dass nur der über die Kopffläche 7 der jeweiligen Zahnprofile 3 hinausragende Abschnitt 80 der jeweiligen Lauffläche 6 der zugeordneten Stützrolle 5 in Kontakt mit einer Führungsschiene tritt, um den Zahnriemen 1 abzustützen.

Gemäß der in den Figuren 1 bis 10 gezeigten Ausführungsform ist eine jeweilige Stützrolle 5 über eine in dem zugehörigen Zahnprofil 3 fixierte Achse 11 drehbar gelagert. Zu diesem Zweck weisen die Zahnprofilabschnitte 3a und 3b Bohrungen 12a und 12b auf, welche die Längsenden der Achse 11 aufnehmen. Die Achse 11, die aus Stahl bestehen kann, ist an einem ersten Längsende 11a als Schraube mit einem Gewindeabschnitt 11b ausgeführt, damit die Achse 11 axial gegen Herausrutschen aus der Bohrung 12a gesichert werden kann. Der Durchmesser der andere Bohrung 12b ist geringfügig kleiner als der Durchmesser des zugehörigen zweiten Längsendes 11c der Achse 11. Folglich ist das erste Längsende 11a der Achse 11 über eine Art Gewindeverbindung 14 in dem Zahnprofilabschnitt 3a des zugehörigen Zahnprofils 3 fixiert, wohingegen das zweite Längsende 11c der Achse 11 in einer Presspassverbindung 15 in dem anderen Zahnprofilabschnitt 3b des zugehörigen Zahnprofils 3 befestigt ist.

Die bei dieser Ausführungsform verwendete Achse 11 ist einteilig und entspricht quasi einer Sonderschraube mit langem zylindrischem Zapfen. Die Aufnahme der Achse 11 im Zahnprofilabschnitt 3b in Form der Bohrung 12b kann ebenso wie die Bohrung 12a als Durchgangsbohrung ausgeführt sein. Fertigungstechnich aufwendiger aber durchaus realisierbar, könnte die Bohrung 12a alternativ auch als ein Sackloch ausgeführt sein. Jedoch haben die jeweiligen Durchgangsbohrungen 12a und 12b in dem dargestellten Ausführungsbeispiel den Vorteil, dass beidseitig des Zahnriemens 1 gebohrt werden kann und die Späne bei der Bearbeitung besser aus den Bohrungen 12a, 12b entfernt werden können.

Um die Schwächung der Zahnprofile 3 mit einer Aussparung 8 so gering wie möglich zu halten, ist unter anderem für das Lagerungsprinzip über die Achse 11 gemäß der Figuren 1 bis 10 eine schmal ausgebildete Stützrolle 5 vorgesehen, wobei das Verhältnis von axialer Länge 16 der Stützrolle 5 zur Riemenbreite 17 in dem dargestellten Ausführungsbeispiel 0,4 (siehe beispielsweise Figur 3) beträgt, wobei auch davon abweichende Verhältnis möglich sind, die aber wenigstens 0,1 betragen sollten.

Um ferner die Reibung zwischen der jeweiligen Achse 11 und der zugehörigen Stützrolle 5 zu minimieren ist der Einsatz von Zwischenstoffen oder Zwischenkörpern denkbar. Demnach könnten kleine Gleitlager, Mini-Nadellager oder Gleitlackschichten mit schmierender Wirkung zusätzlich vorgesehen sein, um Reibungsverluste zwischen Achse 11 und Stützrolle 5 zu minimieren.

Als Alternative zu dem Lagerungsprinzip der Stützrolle 5 über die Achse 11 könnte die Achse 11 entfallen und die Stützrolle 5 stattdessen als Gleitkufe ausgebildet sein. Eine solche Alternative ist aber nur dann sinnvoll, wenn das Material der Kufe zur Führungsschiene weniger Reibung als das Material des Zahnriemens 1, welches vorzugsweise Polyurethan ist, erzeugt.

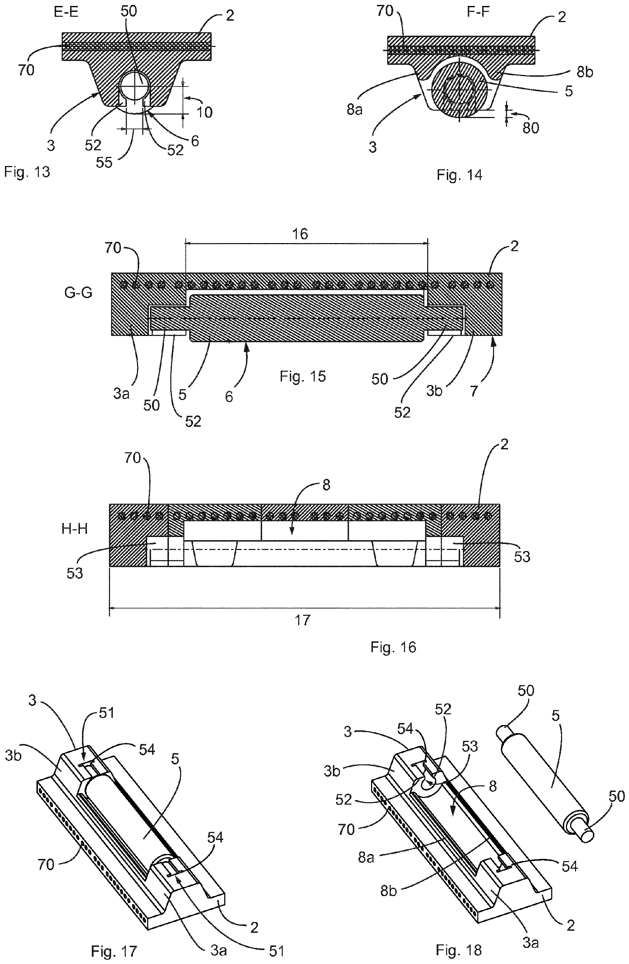

Eine weitere Alternative zu dem Lagerungsprinzip über die Achse 11 ist in den Ausführungsformen der Figuren 11 bis 18 gezeigt. Auch bei dieser Ausführungsform des Zahnriemens 1, der sich durch das Prinzip der Lagerung der Stützrolle 5 von dem Zahnriemen der Figuren 1 bis 10 unterscheidet, weist jedes zweite Zahnprofil 3 eine jeweilige Aussparung 8 auf, die in Bezug auf die Breitenrichtung 9 des Zahnriemens 1 mittig des zugehörigen Zahnprofiles 3 ausgebildet ist und die entsprechende Stützrolle 5 aufnimmt. Ebenfalls teilt auch hier eine jeweilige Aussparung 8 das zugehörige Zahnprofil 3 in die Zahnprofilabschnitte 3a, 3b, welche die zugehörige Stützrolle 5 drehbar aufnehmen. Eine jeweilige Aussparung 8 weist bei dieser Ausführungsform ebenso eine schalenförmige Kontur auf, wobei die in Breitenrichtung 9 verlaufenden Abschnitte 8a, 8b abschnittsweise der Querschnittsform der Zahnprofilabschnitte 3a, 3b folgen bzw. Abschnitten des ursprünglichen Zahnprofils 3 entsprechen, wie insbesondere die Figur 14 zeigt, die eine Schnittdarstellung entlang der Linie F-F in Figur 12 ist, die wiederum eine Draufsicht auf den Zahnriemen 1 ist. Die Aussparung 8 in einem jeweiligen Zahnprofil 3 erstreckt sich auch hier bis in den Riemenkörper 2 hinein und endet knapp oberhalb der längsverlaufenden Verstärkungslitzen 70 (siehe zum Beispiel Figur 14). Ebenso ragt eine jeweilige Stützrolle 5 mit maximal einem Drittel ihres Radius 10 über die Kopffläche 7 des zugehörigen Zahnprofils 3 hinaus. Der Radius 10 ist in Figur 13 dargestellt, die einen Schnitt entlang der Linie E-E aus Figur 12 zeigt. Bis auf diesen hervorstehenden Abschnitt 80 (siehe zum Beispiel Figur 14) der Lauffläche 6 sind die Stützrollen 5 auch bei dieser Ausführungsform vollständig innerhalb der Querschnittsform der jeweiligen Zahnprofile 3 bzw. der Querschnittsform der zugehörigen Zahnprofilabschnitte 3a, 3b aufgenommen, so dass nur der über die Kopffläche 7 der jeweiligen Zahnprofile 3 hinausragende Abschnitt 80 der jeweiligen Lauffläche 6 der zugeordneten Stützrolle 5 in Kontakt mit der Führungsschiene tritt.

Wie die Figuren 11 bis 18 für die weitere Ausführungsform zeigen, ist die Lagerung der Stützrolle 5 nach dem Prinzip einer Welle ausgeführt. Zu diesem Zweck ist endseitig an einer jeweiligen Stützrolle 5 jeweils ein zur drehbaren Lagerung dienender Wellenstummel 50 angeformt, wie zum Beispiel aus Figur 18 ersichtlich ist. Die beiden Wellenstummel 50 werden bei der Montage in zugeordnete Schnappverbindungen 51 eingeclipst, die in den Zahnprofilabschnitten 3a, 3b ausgeformt sind. Die Schnappverbindungen 51 umfassen elastisch verformbare Rückhaltearme 52, die ein Eindrücken der Wellenstummel 50 in einen jeweiligen Aufnahmeraum 53, der in dem Zahnprofilabschnitt 3a bzw. 3b ausgebildet ist, ermöglichen. Zwischen den beiden Rückhaltearmen 52, die an den jeweiligen Zahnprofilabschnitten 3a, 3b ausgebildet sind, ist ein Zwischenraum 55 vorhanden, der kleiner als der Durchmesser des zugeordneten Wellenstummels 50 ist, so dass ein jeweiliger Wellenstummel 50 nach Montage der zugehörigen Stützrolle 5 am Zahnriemen 1 am herausgleiten aus dem entsprechenden Aufnahmeraum 53 gehindert ist. Für die Elastizität der Rückhaltearme 52 sorgen dabei zusätzlich Schlitze 54, die sich in der Kopffläche 7 des Zahnprofils 3 in Längsrichtung 4 erstrecken und die Rückhaltearme 52 in Breitenrichtung 9 begrenzen. Die Ausführungsform nach dem Prinzip der Wellen-Lagerung verwendet im Vergleich zu der zuvor beschriebenen Ausführungsform ein Bauteil (die Achse 11) weniger, wobei als Ersatz der Achse 11 die Stützrolle 5 mit zwei Wellenstummeln 50 ausgeführt ist, welche die Lagerfunktion übernehmen. Da die auf diese Lagerung wirkenden Kräfte stets in Druckrichtung wirken, kann man den Lagersitz in Form der Aufnahmeräume 53 im Zahnriemen 1 zahnseitig als offene Schnappverbindung 51 gestalten. Die Wellenstummel 50 der Stützrolle 5 müssen bei Montage einfach nur einclipsen werden.

Zur Verbesserung der Lagerung der Stützrolle 5 über die Wellenstummel 50 können Zwischenstoffen oder Zwischenkörpern eingesetzt werden, um die Reibung zwischen den Wellenstummeln 50 und den Aufnahmeräumen 53 zu minimieren.

Um die Schwächung der Zahnprofile 3 mit Aussparung 8 so gering wie möglich zu halten, ist für das Lagerungsprinzip über die Wellenstummel 50 (gemäß der Ausführungsform der Figuren 11 bis 18) eine schmal ausgebildete Stützrolle 5 vorgesehen, wobei das Verhältnis von axialer Länge 16 der Stützrolle 5 zur Riemenbreite 17 hierbei 0,6 (siehe beispielsweise Figur 12) beträgt. Natürlich sind auch davon abweichende Verhältnisse möglich, die aber maximal 0,65 betragen sollten.

Die Figur 19 zeigt eine weitere mögliche Ausgestaltung eines Zahnriemens 1, bei welcher die in den Aussparungen 8 angeordneten Stützrollen 5 in Längsrichtung 4 des Zahnriemens 1 in zwei Reihen fluchtend hintereinanderliegend angeordnet sind. Bei dieser Ausführung sind in jedem zweiten Zahnprofil 3 zwei Aussparungen 8 mit jeweiliger Stützrolle 5 nebeneinanderliegend in Breitenrichtung 9 des Zahnriemens 1 vorgesehen, wobei bei diesem Beispiel Aussparungen 8 nur in jedem zweiten Zahnprofil 3 ausgeformt sind. Davon abweichend sind auch Ausführungen vorstellbar, bei denen in jedem Zahnprofil 3 zwei Aussparungen 8 mit Stützrollen 5 vorgesehen sein können. Die zwei Aussparungen 8 unterteilen das Zahnprofil 3 in Zahnprofilabschnitte 3a, 3b, 3c, wobei die beiden Stützrollen 5 pro Zahnprofil 5 von einer gemeinsamen Achse 11 gelagert und gehalten sind. Die Achse 11 ist mit ihrem ersten Längsende, das als Schraube ausgeführt ist, nach Art einer Gewindeverbindung in dem Zahnprofilabschnitt 3a fixiert, während das zweite Längsende der Achse 11 über eine Presspassung in dem Zahnprofilabschnitt 3b fixiert ist. Zwischen ihren Längsenden ist die Achse 11 von dem Zahnprofilanschnitt 3c gehalten, welcher zwischen zwei Stützrollen 5 eines zugehörigen Zahnprofils 3 angeordnet ist. In dem in Figur 19 dargestellten Ausführungsbeispiel beträgt das Verhältnis von axialer Länge 16 einer jeweiligen Stützrolle 5 (die axiale Länge der Stützrolle 5 in Figur 19 ist identisch zu der axialen Länge 16 der Stützrolle 5 in Figur 8) zur Riemenbreite 17' hier 0,2. Als Abwandlung des in Figur 19 gezeigten Ausführungsbeispiels sind Ausführungen denkbar, in denen in jedem Zahnprofil 3 wenigstens zwei Stützrollen 5 untergebracht sind.

Die Figur 20 zeigt eine weitere Abwandlung, bei der in jedem Zahnprofil 3 eine Aussparung 8 mit darin gelagerter Stützrolle 5 ausgebildet ist. Im Gegensatz zu der in Figur 19 gezeigten Ausführung sind die in den Zahnprofilen 3 integrierten Stützrollen 5 nicht mehr fluchtend angeordnet. Vielmehr sind die in den Aussparungen 8 benachbarter Zahnprofile 3 angeordneten Stützrollen 5 in Breitenrichtung 9 derart versetzt zueinander angeordnet, dass die in jedem zweiten Zahnprofil 3 integrierten Stützrollen 5 in Längsrichtung 4 fluchtend zueinander angeordnet sind.

Es versteht sich, dass die in den Figuren 19 und 20 gezeigten Ausführungsformen, bei der die Lagerung einer jeweiligen Stützrolle 5 nach dem Prinzip einer Achse ausgeführt ist, auch auf das Lagerungsprinzip einer Welle (siehe Figuren 11 bis 18) übertragbar ist. Auch ist es möglich, die Lagerungsprinzipien bei einem Zahnriemen zu mischen, so dass Stützrollen 5 sowohl nach dem Lagerungsprinzip einer Achse als auch nach dem Lagerungsprinzip einer Welle vorgesehen sind.

Darüber hinaus sind die in den Figuren 19 und 20 gezeigten Möglichkeiten, eine Stützrolle 5 in jedem Zahnprofil 3 oder zwei Stützrollen 5 in jedem zweiten Zahnprofil 3 vorzusehen, rein exemplarischer Art. Die Anzahl der Stützrollen 3, die in einem Zahnprofil 3 integriert ist, hängt von der Riemenbreite sowie der Art der Verwendung des Zahnriemens ab. Beispielsweise sind auch Anordnungen von Abwechselnd zwei und drei Stützrollen 5 pro Zahnprofil 3 denkbar, wobei die Stützrollen 5 versetzt zueinander angeordnet sein können. Es sind demnach Anordnungen möglich, bei denen die Anzahl der Stützrollen von Zahnprofil 3 zu Zahnprofil 3 unterschiedlich ist. Daraus wird ersichtlich, dass die Erfindung nicht auf die in den Figuren gezeigten Ausführungsformen beschränkt ist, sondern Abwandlungen und Verwendungen von gezeigten Merkmalen einer Ausführungsform bei der anderen Ausführungsform möglich sind.

Wie ferner aus den Figuren 7 und 18 zu erkennen ist, weist die Stützrolle 5 in den vorstehend beschriebenen Ausführungen eine zylindrische Form auf. Als Alternative zu der zylindrischen Form der Stützrollen 5 ist in Figur 21 schematisch eine Stützrolle 5' gezeigt, die in einem Axialschnitt betrachtet ballig ausgebildet ist und für das Lagerungsprinzip der Achse konzipiert ist. Selbstverständlich ist die ballige Form der Stützrolle 5' auch auf die Stützrollen mit Wellenstummel 50, also auf das Lagerungsprinzip nach Art einer Welle, übertragbar. Die Tonnenform ist gegenüber zylindrischen Stützrollen reibungsärmer und weniger empfindlich gegen Kantentragen, wobei auch eine Kombination möglich ist, die ballige Stützrollen 5' und zylindrische Stützrollen 5 bei einem Zahnriemen 1 verwendet.

In den Draufsichten der Figuren 3 und 12 ist jeweils ein Stanzbild 90 erkennbar, welches dazu dient, einen endlichen Zahnriemen zu entwickeln, indem die Längsenden 18a und 18b des Zahnriemens 1 miteinander verschweißt werden. Zu diesem Zweck weisen die jeweiligen Längsenden 18a, 18b des Zahnriemens 1 kammartig und komplementär zueinander ausgebildete Zungen bzw. Stanzfinger 19a und 19b auf, die zur Bildung eines Endlosriemens ineinandergreifend angeordnet und miteinander verschweißt sind (siehe Figur 10, die stellvertretend für beide Ausführungsformen gilt). Die Stanzfinger 19a, 19b werden dabei fertigungstechnisch durch Aussparungen ausgebildet, die in den Längsenden 18a, 18b des Zahnriemens ausgeformt werden. Wie ferner der Figur 3 zu entnehmen ist, erstreckt sich das Stanzbild 90 in Längsrichtung 4 des Zahnriemens 1 und über drei Zahnprofile 3 mit Stützrollen 5. Denkbar sind aber auch Stanzbilder mit einer kleineren oder größeren Längserstreckung 91 als die, die in der Figur 3 gezeigt ist. Wichtig ist im Hinblick auf den Produktionsprozess, dass für einen endlosen, in sich geschlossenen Zahnriemen 1 ein abschließender Stanz- und Schweißprozess durchgeführt wird. Hierfür muss die Lage der Zugträger bzw. Verstärkungslitzen 70 "stanzfreundlich" sein, was bedeutet, dass im Bereich einer in Längsrichtung 4 verlaufenden Stanzlinie des Stanzbildes 90 keine Verstärkungslitzen 70 längslaufend angeordnet sind. Dies ist auch der Grund, weshalb die Abstände zwischen den Verstärkungslitzen 70 ungleichmäßig ausgebildet sind, wie beispielsweise den Figuren 3 und 12 zu entnehmen ist. Ferner müssen die Kavitäten der Aussparungen 8 so gestaltet sein, dass sie entformbar sind und den Schweißprozess nicht behindern.

Soweit bei den verschiedenen Ausführungsformen der Figuren gleiche Bezugszeichen verwendet werden, betreffen diese jeweils identische oder gleiche Elemente oder Bauteile.

Es sei abschließend nochmals betont, dass es für die Erfindung von Bedeutung ist, dass wenigstens in einem Zahnprofil 3 zumindest eine Stützrolle 5 integriert ist, wobei eine jeweilige Stützrolle 5 ausschließlich mit einem Abschnitt 80 ihrer Lauffläche 6 über die Kopffläche 7 des zugehörigen Zahnprofils 3 hinausragt. Nur mit diesem Abschnitt 80 steht eine jeweilige Stützrolle 5 aus dem Querschnitt eines jeweiligen Zahnprofils 3 hervor, so dass die Funktion des eigentlichen Zahnprofils 3 nach wie vor gewährleistet ist. Diesbezüglich sei angemerkt, dass in den Figuren ein Zahnriemen 1 mit T-Profil gezeigt ist. Ein solcher Zahnriemen trägt auf der Zahnscheibe über die Riemen-Zahnlücke. Der Riemen-Zahnkopf liegt in der Zahnscheibe nicht auf. Die vorhandene Luft ist größer als der Überstand der unten aus den Riemenzähnen herausschauenden Stützrollen 5, so dass eine ganz normale Standard-Zahnscheibe zum Einsatz kommen kann. Das AT-Profil trägt hingegen über die Köpfe der Zähne. Hier muss der Lückengrund der Zahnscheiben so angepasst werden, dass in jeder zweiten Zahnlücke ein Zylinderabschnitt freigemacht wird, in den die Stützrolle 5 eintaucht, sofern jedes zweite Zahnprofil 3 mit einer Stützrolle 5 ausgestattet ist. Hierdurch sind dann nur noch ganzzahlige Zähnezahlen der Zahnscheibe zulässig.

Die vorstehend beschriebene Erfindung ist selbstverständlich nicht auf die beschriebenen und dargestellten Ausführungsformen beschränkt. Es ist ersichtlich, dass an den in der Zeichnung dargestellten Ausführungsformen zahlreiche, dem Fachmann entsprechend der beabsichtigten Anwendung naheliegende Abänderungen vorgenommen werden können, ohne dass dadurch der Bereich der Erfindung verlassen wird. Zur Erfindung gehört alles dasjenige, was in der Beschreibung enthalten und/oder in der Zeichnung dargestellt ist, einschließlich dessen, was abweichend von den konkreten Ausführungsbeispielen für den Fachmann naheliegt.

## Patentansprüche

1. Zahnriemen (1) zum Transportieren von Objekten, aufweisend einen bandförmigen Riemenkörper (2), der auf seiner einen Seite angeformte Zahnprofile (3) trägt, die in Längsrichtung (4) des Zahnriemens (1) gleichmäßig verteilt angeordnet sind,
**dadurch gekennzeichnet, dass**
wenigstens ein Zahnprofil (3) zumindest eine Aussparung (8) aufweist, in der eine Stützrolle (5; 5') angeordnet ist, deren Lauffläche (6) zur Abstützung des Zahnriemens (1) über die Kopffläche (7) des zugehörigen Zahnprofiles (3) hinausragt.

2. Zahnriemen (1) nach Anspruch 1, **dadurch gekennzeichnet, dass** die zumindest eine Aussparung (8) in Bezug auf die Breitenrichtung (9) des Zahnriemens (1) das zugehörige Zahnprofil (3) in Zahnprofilabschnitte (3a, 3b, 3c) teilt, wobei die der Aussparung (8) zugehörige Stützrolle (5; 5') in den angrenzenden Zahnprofilabschnitten (3a, 3b, 3c) des zugehörigen Zahnprofiles (3) drehbar gehalten ist.

3. Zahnriemen (1) nach Anspruch 1 oder 2, **dadurch gekennzeichnet, dass** eine jeweilige Stützrolle (5; 5') mit höchstens einem Drittel ihres Radius (10) über die Kopffläche (7) des zugehörigen Zahnprofiles (3) hinausragt.

4. Zahnriemen (1) nach einem der vorhergehenden Ansprüche, **dadurch gekennzeichnet, dass** eine jeweilige Aussparung (8) in einem zugehörigen Zahnprofil (3) eine schalenförmige und abschnittsweise der Kontur der in Breitenrichtung (9) des Zahnriemens angrenzenden Zahnprofilabschnitte (3a, 3b, 3c) entsprechende Querschnittsform aufweist und sich bis in den Riemenkörper (2) hinein erstreckt.

5. Zahnriemen (1) nach einem der vorhergehenden Ansprüche, **dadurch gekennzeichnet, dass** eine jeweilige Stützrolle (5; 5') über eine in dem zugehörigen Zahnprofil (3) fixierte Achse (11) drehbar gelagert ist.

6. Zahnriemen (1) nach Anspruch 5, **dadurch gekennzeichnet, dass** ein erstes Längsende (11a) der Achse (11) über eine Gewindeverbindung (14) in einem Zahnprofilabschnitt (3a) eines zugehörigen Zahnprofils (3) fixiert ist und ein zweites Längsende (11c) der Achse (11) in einer Presspassverbindung (15) in dem anderen Zahnprofilabschnitt (3b) des zugehörigen Zahnprofils (3) befestigt ist.

7. Zahnriemen (1) nach einem der Ansprüche 1 bis 4, **dadurch gekennzeichnet, dass** endseitig an einer jeweiligen Stützrolle (5; 5') jeweils ein zur drehbaren Lagerung dienender Wellenstummel (50) angeformt ist, wobei die Zahnprofilabschnitte (3a, 3b) jeweils eine Schnappverbindung (51) zur Aufnahme und drehbaren Lagerung eines zugehörigen Wellenstummels (50) aufweisen.

8. Zahnriemen (1) nach einem der vorhergehenden Ansprüche, **dadurch gekennzeichnet, dass** das Verhältnis von axialer Länge (16) einer jeweiligen Stützrolle (5; 5') zur Riemenbreite (17; 17') wenigstens 0,1 und höchstens 0,65 beträgt.

9. Zahnriemen (1) nach einem der vorhergehenden Ansprüche, **dadurch gekennzeichnet, dass** die Längsenden (18a, 18b) des Zahnriemens (1) kammartig und komplementär zueinander ausgebildete Stanzfinger (19a, 19b) aufweisen, die ein vorbestimmtes Stanzbild (90) definieren und die zur Bildung eines Endlosriemens ineinandergreifend angeordnet und miteinander verschweißt sind, wobei sich das Stanzbild (90) in Längsrichtung (4) des Zahnriemens (1) über wenigstens zwei Zahnprofile (3) mit Stützrollen (5; 5') erstreckt.

10. Zahnriemen (1) nach einem der vorhergehenden Ansprüche, **dadurch gekennzeichnet, dass** der Riemenkörper (2) längsverlaufende Verstärkungslitzen (70) aufweist, die ausschließlich seitlich neben einer jeweiligen Stützrolle (5; 5') oder auch unterhalb einer jeweiligen Stützrolle (5; 5') verlaufen.

11. Zahnriemen (1) nach einem der vorhergehenden Ansprüche, **dadurch gekennzeichnet, dass** die in den Aussparungen (8) angeordneten Stützrollen (5; 5') in Längsrichtung (4) des Zahnriemens (1) fluchtend hintereinanderliegend angeordnet sind.

12. Zahnriemen (1) nach Anspruch 11, **dadurch gekennzeichnet, dass** in jedem zweiten Zahnprofil (3) des Zahnriemens (1) zumindest eine eine Stützrolle (5; 5') aufnehmende Aussparung (8) ausgebildet ist.

13. Zahnriemen (1) nach einem der Ansprüche 1 bis 10, **dadurch gekennzeichnet, dass** die in den Aussparungen (8) benachbarter Zahnprofile (3) angeordneten Stützrollen (5; 5') in Längsrichtung (4) des Zahnriemens in Breitenrichtung (9) versetzt zueinander angeordnet sind.

14. Zahnriemen (1) nach einem der Ansprüche 1 bis 10 oder 14, **dadurch gekennzeichnet, dass** in jedem Zahnprofil (3) des Zahnriemens (1) zumindest eine eine Stützrolle (5; 5') aufnehmende Aussparung (8) ausgebildet ist.

15. Zahnriemen (1) nach einem der vorhergehenden Ansprüche, **dadurch gekennzeichnet, dass** wenigstens eine Stützrolle (5') in einem Axialschnitt betrachtet ballig ausgebildet ist.

## Claims

1. A toothed belt (1) for transporting objects, having a strip-shaped belt body (2), which bears tooth profiles (3), which are integrally formed on one side of the belt body and are uniformly distributed in the longitudinal direction (4) of the toothed belt (1),
**characterised in that**
at least one tooth profile (3) has at least one cut-out (8), in which a supporting rolling means (5; 5') is arranged, the running face (6) of which projects beyond the crest (7) of the associated tooth profile (3) to support the toothed belt (1).

2. The toothed belt (1) according to Claim 1, **characterised in that** the at least one cut-out (8) divides the associated tooth profile (3) into tooth profile sections (3a, 3b, 3c) in relation to the width direction (9) of the toothed belt (1), wherein the supporting rolling means (5; 5') associated with the cut-out (8) is held rotatably in the adjacent tooth profile sections (3a, 3b, 3c) of the associated tooth profile (3).

3. The toothed belt (1) according to Claim 1 or 2, **characterised in that** a respective supporting rolling means (5; 5') projects beyond the crest (7) of the associated tooth profile (3) by at most one third of the radius (10) of the supporting rolling means.

4. The toothed belt (1) according to any one of the preceding claims, **characterised in that** a respective cut-out (8) in an associated tooth profile (3) has a bowl-shaped cross-sectional shape which corresponds in some sections to the contour of the tooth profile sections (3a, 3b, 3c) adjacent thereto in the width direction (9) of the toothed belt, and the cut-out extends into the belt body (2).

5. The toothed belt (1) according to any one of the preceding claims, **characterised in that** a respective supporting rolling means (5; 5') is rotatably mounted via a shaft (11) fixed in the associated tooth profile (3).

6. The toothed belt (1) according to Claim 5, **characterised in that** a first longitudinal end (11a) of the shaft (11) is fixed in a tooth profile section (3a) of an associated tooth profile (3) via a threaded connection (14), and a second longitudinal end (11c) of the shaft (11) is fastened in the other tooth profile section (3b) of the associated tooth profile (3) by means of a press fit (15).

7. The toothed belt (1) according to any one of Claims 1 to 4, **characterised in that** a shaft journal (50) is integrally formed on the end of each supporting rolling means (5; 5') for the purpose of rotatable mounting, wherein the tooth profile sections (3a, 3b) each have a snap connection (51) for receiving and rotatably mounting an associated shaft journal (50).

8. The toothed belt (1) according to any one of the preceding claims, **characterised in that** the ratio of the axial length (16) of a respective supporting rolling means (5; 5') to the belt width (17; 17') is at least 0.1 and at most 0.65.

9. The toothed belt (1) according to any one of the preceding claims, **characterised in that** the longitudinal ends (18a, 18b) of the toothed belt (1) have comb-like punched fingers (19a, 19b), which are formed to complement each other and define a specified punch pattern (90) and are arranged in mutual engagement and welded to each other so as to form a continuous belt, wherein the punch pattern (90) extends in the longitudinal direction (4) of the toothed belt (1) over at least two tooth profiles (3) with supporting rolling means (5; 5').

10. The toothed belt (1) according to any one of the preceding claims, **characterised in that** the belt body (2) has reinforcing strands (70), which run longitudinally and exclusively laterally to a respective supporting rolling means (5; 5') or also underneath a respective supporting rolling means (5; 5').

11. The toothed belt (1) according to any one of the preceding claims, **characterised in that** the supporting rolling means (5; 5') arranged in the cut-outs (8) are arranged in alignment one behind the other in the longitudinal direction (4) of the toothed belt (1).

12. The toothed belt (1) according to Claim 11, **characterised in that** at least one cut-out (8) accommodating a supporting rolling means (5; 5') is formed in every other tooth profile (3) of the toothed belt (1).

13. The toothed belt (1) according to any one of Claims 1 to 10, **characterised in that** the supporting rolling means (5; 5') arranged in the cut-outs (8) of adjacent tooth profiles (3) in the longitudinal direction (4) of the toothed belt are arranged offset to each other in the width direction (9).

14. The toothed belt (1) according to any one of Claims 1 to 10 or 14, **characterised in that** at least one cut-out (8) accommodating a supporting rolling means (5; 5') is formed in each tooth profile (3) of the toothed belt (1).

15. The toothed belt (1) according to any one of the preceding claims, **characterised in that** at least one supporting rolling means (5') is crowned when viewed in axial section.

## Revendications

1. Courroie dentée (1) pour transporter des objets, comportant un corps de courroie en forme de bande (2), qui porte des profils de denté (3) conformés sur un de ses côtés, qui sont disposés répartis uniformément dans le sens longitudinal (4) de la courroie dentée (1),
**caractérisée en ce**
**qu'**au moins un profil de dent (3) comporte au moins un évidement (8) dans lequel est disposé un rouleau pour le support (5 ; 5') dont la surface de roulement (6) pour supporter la courroie dentée (1) dépasse au-dessus de la surface de tête (7) du profil de dent (3) correspondant.

2. Courroie dentée (1) selon la revendication 1, **caractérisée en ce qu'**au moins un évidement (8) sépare en référence au sens de la largeur (9) de la courroie dentée (1), le profil de dent (3) correspondant en sections de profil de dent (3a, 3b, 3c), le rouleau pour le support (5 ; 5') correspondant à l'évidement (8) étant maintenu pouvant tourner dans les sections de profil de dent adjacentes (3a, 3b, 3c) du profil de dent (3) correspondant.

3. Courroie dentée (1) selon la revendication 1 ou 2, **caractérisée en ce qu'**un rouleau pour le support (5 ; 5') respectif dépasse au maximum d'un tiers de son rayon (10) au-dessus de la surface de tête (7) du profil de dent (3) correspondant.

4. Courroie dentée (1) selon l'une quelconque des revendications précédentes, **caractérisée en ce qu'**un évidement respectif (8) dans un profil de dent (3) correspondant présente une forme de section transversale en forme de cuvette et correspondant par tronçon au contour des sections de profil de dent (3a, 3b, 3c) adjacentes dans le sens de la largeur (9) de la courroie dentée et s'étendant jusque dans le corps de courroie (2).

5. Courroie dentée (1) selon l'une quelconque des revendications précédentes, **caractérisée en ce qu'**un rouleau pour le support (5 ; 5') respectif est logé pouvant tourner sur un axe (11) fixé dans le profil de dent (3) correspondant.

6. Courroie dentée (1) selon la revendication 5, **caractérisée en ce qu'**une première extrémité longitudinale (11a) de l'axe (11) est fixée sur un raccord fileté (14) dans une section de profil de dent (3a) d'un profil de dent (3) correspondant et une deuxième extrémité longitudinale (11c) de l'axe (11) est fixée dans un raccord à ajustement serré (15) dans l'autre section de profil de dent (3b) du profil de dent (3) correspondant.

7. Courroie dentée (1) selon l'une quelconque des revendications 1 à 4, **caractérisée en ce qu'**un bout d'arbre (50) servant au logement pouvant tourner est respectivement conformé en extrémité sur un rouleau pour le support (5 ; 5') respectif, les sections de profil de dent (3a, 3b) comportant respectivement un raccord à déclic (51) pour la réception et le logement pouvant tourner d'un bout d'arbre (50) correspondant.

8. Courroie dentée (1) selon l'une quelconque des revendications précédentes, **caractérisée en ce que** le rapport entre la longueur axiale (16) d'un rouleau pour le support (5 ; 5') respectif et la largeur de courroie (17 ; 17') est d'au moins 0,1 et au maximum de 0,65.

9. Courroie dentée (1) selon l'une quelconque des revendications précédentes, **caractérisée en ce que** les extrémités longitudinales (18a, 18b) de la courroie dentée (1) comportent des ergots d'emboutissage (19a, 19b) constitués en forme de peigne et de manière complémentaire les uns par rapport aux autres, qui définissent une image d'emboutissage (90) prédéfinie et qui sont disposés s'engrenant l'un dans l'autre et soudés les uns aux autres pour former une courroie sans fin, l'image d'emboutissage (90) s'étendant dans le sens longitudinal (4) de la courroie dentée (1) sur au moins deux profils de dent (3) avec des rouleaux pour le support (5 ; 5').

10. Courroie dentée (1) selon l'une quelconque des revendications précédentes, **caractérisée en ce que** le corps de courroie (2) comporte des brins de renfort (70) longitudinaux, qui passent exclusivement sur le côté près d'un rouleau pour le support (5 ; 5') respectif ou également en dessous d'un rouleau pour le support (5 ; 5') respectif.

11. Courroie dentée (1) selon l'une quelconque des revendications précédentes, **caractérisée en ce que** les rouleaux pour le support (5 ; 5') disposés dans les évidements (8) sont disposés les uns derrière les autres en alignement dans le sens longitudinal (4) de la courroie dentée (1).

12. Courroie dentée (1) selon la revendication 11, **caractérisée en ce que** dans chaque deuxième profil de dent (3) de la courroie dentée (1) est au moins constitué un évidement (8) recevant un rouleau pour le support (5 ; 5').

13. Courroie dentée (1) selon l'une quelconque des revendications 1 à 10, **caractérisée en ce que** les rouleaux pour le support (5 ; 5') disposés dans les évidements (8) des profils de dent (3) voisins sont disposés dans le sens longitudinal (4) de la courroie dentée dans le sens de la largeur (9) déportés les uns par rapport aux autres.

14. Courroie dentée (1) selon l'une quelconque des revendications 1 à 10 ou 14, **caractérisée en ce que** dans chaque profil de dent (3) de la courroie dentée (1) est constitué au moins un évidement (8) recevant un rouleau pour le support (5 ; 5').

15. Courroie dentée (1) selon l'une quelconque des revendications précédentes, **caractérisée en ce qu'**au moins un rouleau pour le support (5'), vu dans une coupe axiale, est constitué de forme bombée.
